# EUROPÄISCHE PATENTSCHRIFT

(11) **EP 0 566 917 B1**
(45) Veröffentlichungstag und Bekanntmachung des Hinweises auf die Patenterteilung: **24.07.1996**
(21) Anmeldenummer: 93105566.9
(22) Anmeldetag: 03.04.1993
(51) Int. Cl.: H02M 3/335, H04N 5/63

(54) **Freischwingendes Schaltnetzteil**
Freely oscillating converter
Convertisseur oscillant librement

(30) Priorität: 19.04.1992 DE 4212472
(43) Veröffentlichungstag der Anmeldung: 27.10.1993
(73) Patentinhaber: DEUTSCHE THOMSON-BRANDT GMBH, 78048 Villingen-Schwenningen (DE)
(72) Erfinder: Palata, Jaromir, W-7730 VS-Villingen (DE)

(56) Entgegenhaltungen:
- DE-A- 3 312 209
- DE-A- 3 720 197
- US-A- 4 623 960

## Beschreibung

Die Erfindung geht aus von einem freischwingenden Schaltnetzteil gemäß dem Oberbegriff des Anspruchs 1. Schaltnetzteile mit einer Regelung nur auf der Primärseite des Trenntransformators haben den Vorteil, daß kein Übertragungselement zur Übertragung einer Regelgröße von der Sekundärseite auf die Primärseite des Trenntransformators notwendig ist, jedoch den Nachteil, daß die zu stabilisiereuden Spannungen auf der Sekundärseite nicht direkt ausgewertet werden und somit die Regelung zur Stabilisierung dieser Spannungen oft nicht ausreichend ist. Schaltnetzteile mit einer Regelung von der Sekundärseite auf die Primärseite haben den Vorteil, daß durch die unmittelbare Auswertung der zu stabilisierenden sekundärseitigen Spannungen eine gute Stabilisierung erreicht wird, jedoch den Nachteil, daß ein Element wie z.B. ein Trennübertrager oder ein Optokoppler zur Übertragung einer Regelgröße von der Sekundärseite auf die Primärseite benötigt wird.

Wenn derartige Schaltnetzteile in einem Fernsehempfänger für einen Bereitschaftsbetrieb oder sogenannten Standby-Betrieb auf geringe übertragene Leistung von etwa 5 - 8 Watt umgeschaltet werden, müßte der Schalttransistor nur sehr kurze Zeiten eingeschaltet werden. Dadurch kann es zu relativ hohen Schaltverlusten und zu einer Gefährdung des Schalttransistors kommen. Es ist daher bekannt, bei Betrieb mit geringer übertragener Leistung den Schalttransistor nur noch paket- oder burstartig mit ausreichend langer Einschaltzeit und ausreichend hohen Strom einzuschalten und dazwischen für eine längere Zeit gesperrt zu lassen, während der überhaupt keine Leistung übertragen wird. Schaltnetzteile, die nach diesem Prinzip arbeiten, sind im Aufbau relativ kompliziert und benötigen im allgemeinen spezielle integrierte Schaltungen.

Der Erfindung liegt die Aufgabe zugrunde, ein freischwingendes Schaltnetzteil mit reiner Primärregelung zu schaffen, das mit diskreten Bauteilen realisierbar ist und keine speziellen ellen IC's benötigt, einen automatischen Betrieb mit PWM-Regelung zur Stabilisierung bei voller übertragener Leistung und Paketsteuerung bei geringer übertragener Leistung ermöglicht, kurzschlußfest ist, trotz der reinen Primärregelung eine gute Stabilisierung bewirkt und einen guten Wirkungsgrad aufweist. Diese Aufgabe wird durch die im Anspruch 1 angegebene Erfindung gelöst. Vorteilhafte Weiterbildungen der Erfindung sind in den Unteransprüchen angegeben.

Durch die DE-A-33 12 209 ist ein Sperrschwinger-Schaltnetzteil bekannt, das gegen ein Ansteigen der Spannung an der Primärseite des Transformators im Leerlaufbetrieb geschützt ist. Dabei ist der Ausgang eines den Schalttransistor steuernden Pulsdauer-Modulators über ein Koppelnetzwerk an den Eingang des Regelverstärkers angeschlossen.

Das erfindungsgemäße Schaltnetzteil hat im wesentlichen folgende Vorteile: Durch die Regelung nur auf Primärseite wird ein Element zur Übertragung einer Regelgröße von der Sekundärseite auf die Primärseite wie z.B. ein getrennter Übertrager oder ein Optokoppler nicht benötigt. Durch die PWM-Regelung bei Normalbetrieb mit großer Leistung durch gesteuerte Teilung der vom Strommeßwiderstand abgenommen Abschaltspannung wird indessen eine wirkungsvolle Stabilisierung der sekundärseitig erzeugten Betriebsspannungen erreicht. Durch die beiden Schaltungen mit verschiedenen Schwellwerten erfolgt selbsttätig ein Übergang von der PWM-Regelung im Normalbetrieb auf die Paketregelung im Betrieb mit geringer übertragener Leistung. Dabei werden vorzugsweise bereits vorhandene Bauteile für die Einschaltung und Realisierung dieser verschiedenen Betriebsarten ausgenutzt. Die Primärseite bildet einen Oszillator, durch den das Schaltnetzteil freischwingend ausgebildet ist. Dieser Oszillator hat darüberhinaus zwei Funktionen. Er bewirkt bei einer großen übertragenen Leistung im Normalbetrieb eine kontinuierliche PWM-Regelung in der Ansteuerung des Schalttransistors, bewirkt aber andererseits automatisch bei kleiner übertragener Leistung eine Pause in der Ansteuerung des Schalttransistors zur Erzielung des beschriebenen Paketbetriebes.

Bei einer Weiterbildung der Erfindung gemäß den Ansprüchen 9 und 10 wird ein negativer Innenwiderstand des Schaltnetzteils nachgebildet, der den an sich vorhandenen positiven Innenwiderstand kompensiert und dadurch ein Schaltnetzteil mit sehr geringem Innenwiderstand ermöglicht. Bei einer anderen Weiterbildung der Erfindung gemäß den Ansprüchen 11 - 13 wird durch eine zusätzliche Schaltungsmaßnahme das Abschaltverhalten des Schalttransistors zu Beginn der Sperrphase beträchtlich verbessert. Die Erfindung ist insbesondere für kleinere Fernsehempfänger vorteilhaft anwendbar, ebenso bei vergleichbaren Geräten wie Videorecordern und CD-Spielern.

Die Erfindung wird im folgenden anhand der Zeichnung an drei Ausführungsbeispielen erläutert. Darin zeigen
- Fig. 1: das vollständige Schaltbild eines erfindungsgemäßen Schaltnetzteils,
- Fig. 2: eine vereinfachte Version der Schaltung gemäß Fig. 1 und
- Fig. 3: eine Abwandlung der Schaltung nach Fig. 2.

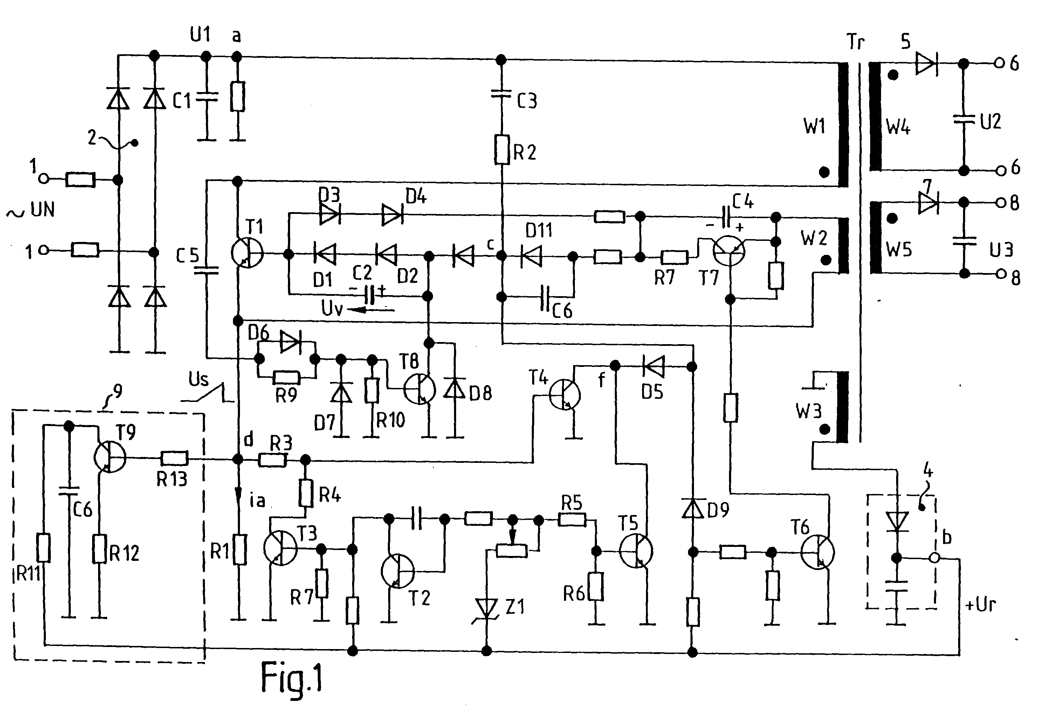

Figur 1 zeigt ein freischwingendes Schaltnetzteil mit die Netzspannung UN führenden Klemmen 1, dem Netzbrückengleichrichter 2, dem Ladekondensator C1, dem Trenntransformator Tr, dem Schalttransistor T1 und dem Strommeßwiderstand R1. Der Trenntransformator Tr enthält die Primär- oder Arbeitswicklung W1, die weitere Primärwicklung W2, die die Schaltung freischwingend ausbildet und die Ansteuerung des Schalttransistors T1 bewirkt, und die Regelwicklung W3, die am Ausgang b des Regelgleichrichters 4 eine Regelspannung Ur zur Stabilisierung und zur Umschaltung zwischen Betrieb mit hoher Leistung und geringer Leistung bewirkt. Tr enthält außerdem eine Sekundärwicklung W4, die über den Gleichrichter 5 an den Klemmen 6 eine erste Betriebsspannung U2 erzeugt, sowie eine zweite Sekundärwicklung W5, die über den Gleichrichter 7 an den Klemmen 8 eine weitere Betriebsspannung U3 erzeugt. In der Basisleitung des Schalttransistors T1 liegt ein Sperrspannungsnetzwerk mit den Dioden D1, D2 und dem Kondensator C2, das eine Sperrspannung Uv erzeugt. Zwischen dem die Betriebsspannung U1 für das Schaltnetzteil liefernden Punkt a und dem Punkt c in der Basisleitung des Schalttransistors T1 liegt noch die Startschaltung mit dem Kondensator C3 und dem Widerstand R2. Die soweit beschriebene Schaltung ist bekannt.

Die Regelspannung Ur vom Punkt b gelangt an eine erste Schwellwertschaltung mit der Zenerdiode Z1 und den Transistoren T2, T3. T3 ist Bestandteil eines Spannungsteilers R3, R4, der zwischen dem Punkt d und der Basis des Abschalttransistors T4 liegt, dessen Kollektor/Emitter-Strecke in Reihe mit der Diode D5 zwischen dem Punkt c im Basisweg des Schalttransistors T1 und Erde liegt.

Ur gelangt außerdem über die Zenerdiode Z1 und den Spannungsteiler aus den Widerständen R5, R6 an die Basis des Transistors T5, dessen Kollektor über die Dioden D5, D9 an die Basis des Transistors T6 angeschlossen ist. Dessen Kollektor ist an die Basis des Transistors T7 angeschlossen, dessen Kollektor/Emitter-Strecke in Reihe mit dem Widerstand R7 parallel zu dem Koppelkondensator C4 im Basisweg des Schalttransistors T1 liegt. Die Wirkungsweise der Schaltung wird im folgenden getrennt für den Normalbetrieb mit hoher Leistung und den Betrieb mit geringer Leistung und Paketsteuerung von T1 erläutert.

Bei Normalbetrieb mit hoher übertragener Leistung von etwa 40 - 100 Watt wird Ur durch die hohe Belastung des Transformators Tr zunächst kleiner. Ur gelangt dann über die leitende Zenerdiode Z1 auf die Basis von T2 und schaltet durch T3 den Widerstand R4 mehr oder weniger als Spannungsteilerwiderstand ein. Die durch den sägezahnförmigen Strom ia in der Flußphase von T1 an R1 abfallende sägezahnförmige Abschaltspannung Us gelangt dann mehr oder weniger geteilt auf T4 und bewirkt bei einem bestimmten Wert, daß T4 leitend wird, den Punkt c erdet, die Basisansteuerspannung für T1 unterbricht und dadurch T1 abschaltet. Es seien jetzt zwei Grenzfälle betrachtet. Bei maximaler Last, also minimalem Wert von Ur, wird T2 gesperrt, wodurch T3 leitend wird. Us wird jetzt durch R3 und R4 maximal geteilt. Das bedeutet, daß Us am Punkt d einen größeren Endwert einnehmen muß, um T4 leitend zu steuern. Der Strom ia erreicht also einen hohen Endwert, was einer großen übertragenen Leistung entspricht. Im anderen Grenzfall, wenn die Last an den Klemmen 6, 8 gering ist, steigt Ur an, so daß nunmehr T2 leitend und T3 gesperrt wird. Us wird jetzt durch R3 und R4 nicht geteilt und gelangt in voller Größe auf die Basis von T4. Das bedeutet, daß schon bei einem geringeren Wert von Us und ia T4 leitend und T1 abgeschaltet wird. Das bedeutet wiederum einen geringeren Endwert von ia und somit eine geringere übertragene Leistung. Zwischen diesen Grenzwerten erfolgt nun im Normalbetrieb die Stabilisierung von U2 und U3 durch eine Pulsweitenmodulation in der Einschaltdauer von T1. Wenn z.B. die Last an den Klemmen 6, 8 ansteigt, sinkt die Amplitude aller am Transformator Tr erzeugten Impulsspannungen und somit auch der positiven Regelspannung Ur. Dadurch gelangt eine weniger positive Spannung Ur, verringert um die Spannung der Zenerdiode Z1, auf die Basis von T2, so daß T2 weniger leitend und T3 mehr leitend wird. Us wird nun durch R3, R4, T3 stärker geteilt. Das bedeutet, daß T4 erst später leitend wird und T1 abschaltet, also der Endwert von Us und ia größere Endwerte annehmen, die übertragene Leistung erhöht und somit die eingangs angenommene Verringerung der Spannungen U2, U3 und Ur ausgeregelt wird. T4 bewirkt also eine Pulsweitenmodulation in der Ansteuerung von T1 in dem Sinne, daß mit steigender Last die Einschaltdauer von T1 durch T4 erhöht wird. Auf diese Weise werden die erzeugten Betriebsspannungen U2, U3 stabilisiert. Durch die Spannungsteilung durch R5 und R6 ist dabei T5 noch gesperrt, wodurch T6 und T7 leitend sind. C4 ist dadurch überbrückt und hat in dieser Betriebsart praktisch keine Wirkung.

Wenn die Last an den Klemmen 6, 8 beträchtlich verringert wird, z.B. bei einem Bereitschaftsbetrieb oder Standby-Betrieb, steigt die Amplitude der Impulsspannungen am Transformator Tr und damit der Wert von Ur an. Jetzt wird trotz der Teilung durch den Spannungsteilers R5, R6 der Transistor T5 leitend, der Punkt f negativer, wodurch die Transistoren T6 und damit auch T7 gesperrt werden. Durch die Sperrung von T7 wird in der Basisleitung von T1 der Kondensator C4 wirksam. C4 wird dadurch über die Basis/Emitter-Diode von T1 mit der dargestellten Polarität aufgeladen, bis schließlich die Spannung an C4 den positiven Anteil der von der Wicklung W2 gelieferten Spannung erreicht und dar Schalttransistor T1 gesperrt wird. Dadurch wird das Paket unterbrochen. Es entsteht dann eine Pause im Schwingen von T1, die den eingangs beschriebenen Paketbetrieb bewirkt. T1 bleibt jetzt eine gewisse Zeit gesperrt. Dadurch werden die Kondensatoren an den Klemmen 6, 8 nicht mehr nachgeladen, so daß Ur wieder abfällt. Am Ende der Pause des Paketbetriebes wird T5 schließlich wieder gesperrt, T6 und T7 wieder leitend, der Kondensator C4 wieder überbrückt, so daß der Schalttransistor T1 von der Wicklung W2 wieder mit Basisstrom versorgt wird und wieder Schwingungen mit voller Sättigung von T1 entstehen. Die dargestellte Schaltung bewirkt also einen selbsttätigen Übergang von dem Normalbetrieb mit hoher übertragener Leistung und PWM-Regelung in der Ansteuerung von T1 und dem Paketbetrieb, bei dem T1 jeweils nur während der Burstpakete schwingt und dazwischen für eine Zeit nicht schwingt. Im Paketbetrieb ist T3 immer gesperrt, damit Us ungeteilt auf die Basis von T4 gelangt und somit T1 schon bei einem geringen Stromwert von ia abgeschaltet wird.

Der Kollektor von T5, also der Punkt f, ist noch mit dem Punkt c in der Basisleitung von T1 verbunden. Dadurch wird folgendes erreicht. Am Ende der Pause während des Paketbetriebes wird, wie beschrieben, T5 wieder gesperrt, so daß am Punkt f ein positiver Impuls auftritt, der auf den Punkt c in der Basisleitung von T1 gelangt. Dadurch wird erreicht, daß der erste Ansteuerimpuls während des Paketes wieder eine volle Sättigung von T1 bewirkt. Das hat den Vorteil, daß das Wiedereinschalten nach der Pause nicht "weich" mit entsprechender Verlustleistung und Gefährdung von T1, sondern gewissermaßen "hart" erfolgt.

Zwischen dem Kollektor von T1 und dem Punkt c ist noch die Schaltung mit dem Kondensator C5, der Diode D6, dem Widerstand R9, der Diode D7, dem Widerstand R10, dem Transistor T8 und der Diode D8 vorgesehen. Diese zusätzliche Schaltung dient zur Verbesserung der Sperrung des Schalttransistors T1 am Ende der Einschaltphase, also beim Abschalten von ia, und arbeitet folgendermaßen: Die Einschaltzeit von T1 wird an sich von dem leitend gesteuerten T4 beendet, indem T4 den Basisstrom für T1 abschaltet. Danach bleibt T1 ohne Basisstrom eine gewisse Zeit leitend, bedingt durch die Sättigung von im Transistor T1 vorhandenen Ladungsträgern. T1 verläßt nach einigen µs ohne Basisstrom die Sättigung, wodurch der Kollektor etwas positiv gegen Masse wird. Diese positive Anstieg wird über das Dämpfungsglied mit C5, D6 und R9 auf die Basis von T8 übertragen, so daß T8 leitend wird und den Punkt c gegen Erde kurzschließt. Der Kondensator C2 ist indessen mit der dargestellten Polarität auf die Spannung Uv nämlich die Summe der Durchflußspannungen von D1 und D2, aufgeladen. Durch den leitenden T8 wird somit die positive Elektrode von C2 geerdert. Dadurch wird die volle Spannung Uv mit negativer Polarität an der Basis von T1 wirksam, so daß eine Abschaltung von T1 in denkbar kurzer Zeit erreicht wird. D7 dient zum Schutz von D8 gegen eine zu hohe negative Spannung an der Basis. Insgesamt wird durch das schnelle Abschalten von T1 durch T4 und T8 eine besonders geringe Verlustleistung im T1 erreicht. Die Diode D8 zwischen dem Kollektor von T8 und Erde hat folgende Aufgabe. D8 bewirkt zusammen mit den Dioden D1, D2, D3, D4 und R in der Basisleitung von T1 eine Stabilisierung der von der Wicklung W2 der Basis von T1 zugeführten negativen Spannung. Die von der Wicklung W2 gelieferte negative Spannung ist an sich unkontrolliert hoch und kann an der Basis/Emitter-Strekce von T1 unzulässig hohe Werte annehmen. Die Bauteile D4, D3, D1, D2 und D8 dienen zur Begrenzung dieser negativen Spannung von z.B. größer als 5 Volt an der Basis/Emitter-Strecke von T1. Außerdem wird dadurch ein unerwünschter Inversbetrieb von T8 verhindert. Die an die Basis von T1 gelangenden negativen Spannungen sind dann beide begrenzt, und zwar die negative Spannung von C2 durch die Dioden D1 und D2 und die negative Spannung von der Wicklung W2 durch die Dioden D4, D3, D1, D2 und D8. Durch diese Schaltung wird ein zusätzlicher Schutz von T1 gegen zu hohe Basis/Emitter-Spannung erreicht.

Das Netzwerk C5, D6, R9 dient zusätzlich als sogenannter snubber zur Begrenzung von positiven Spannungspitzen am Kollektor von T1 zu Beginn der Sperrphase von T1. Das Netzwerk hat somit in vorteilhafter Weise eine Doppelfunktion, nämlich Verbesserung der Sperrung von T1 zu Beginn der Sperrphase und zusätzlich Begrenzung von positiven Spannungspitzen am Kollektor von T1. Das wird dadurch erreicht, daß das an sich geerdete rechte Ende der Parallelschaltung D6/R9 nicht direkt geerdet, sondern an die Basis des Schalthilfstransistors T8 angeschlossen ist.

Zwischen dem Punkt d und dem Punkt b ist noch die zusätzliche Schaltung 9 mit dem Transistor T9, dem Kondensator C6 und den Widerständen R11, R12, R13 vorgesehen. Diese Schaltung dient zusätzlich zur Verringerung des Innenwiderstandes an den Ausgängen des Schaltnetzteils und arbeitet im Sinne einer gesteuerten Stromsenke folgendermaßen: Mit steigender Last steigen durch die Pulsweitenregelung ia und Us am Punkt d, an. Dadurch wird über den Widerstand R13 auch T9 mehr leitend. Durch die Siebwirkung durch C6 wird somit am Punkt b eine erhöhte Gleichspannungslast wirksam, die den Wert von Ur weiter verringert. Dadurch wird dem Regelspannungsweg eine zusätzliche Verringerung von Ur vorgetäuscht und somit die Wirkung des verringerten Wertes von Ur zur Erhöhung des Maximalwertes von Us und ia erhöht. Der durch die Schaltung 9 gebildete negative Innenwiderstand ist somit in der Lage, den an sich noch verbleibenden positiven Innenwiderstand des Schaltnetzteils zu kompensieren und somit für den Normalbetrieb mit hoher übertragener Leistung einen sehr geringen Innenwiderstand des Schaltnetzteils zu gewährleisten.

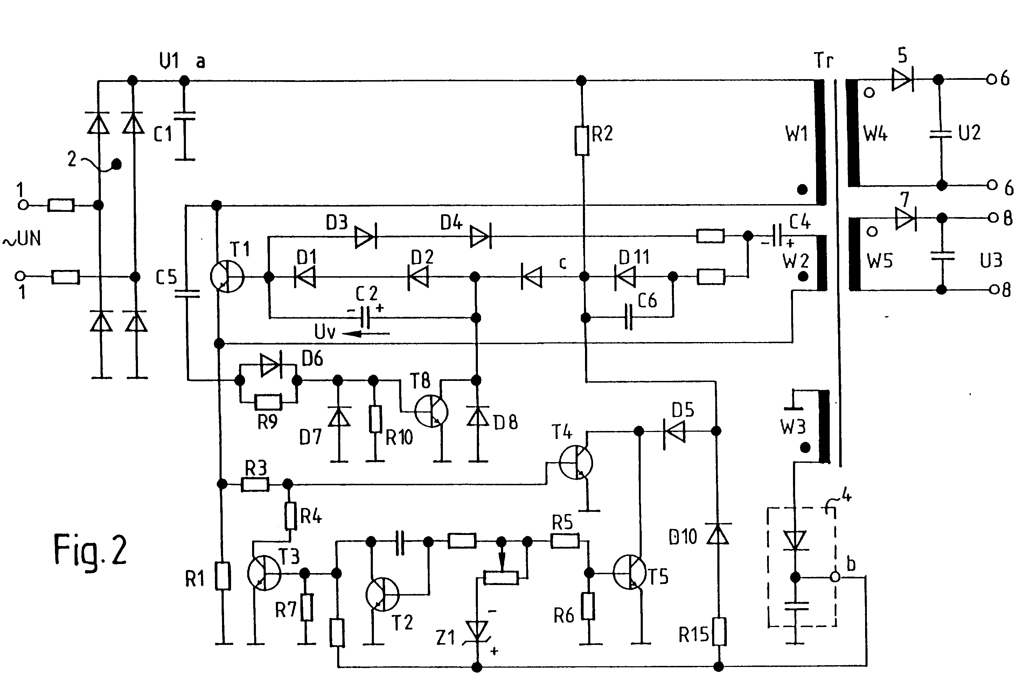

Fig. 2 zeigt eine vereinfachte Version der Schaltung nach Fig. 1. Die Schaltung nach Fig. 2 enthält nicht die Schaltung 9 zur Bildung eines negativen Innenwiderstandes und auch nicht den Transistor T7, der den Koppelkondensator C4 in der beschriebenen Weise kurzschließt. Statt des Transistors T7 ist für den Koppelkondensator C4 ein Stromweg mit der Diode D10 und dem Widerstand R15 vorgesehen. Bei dieser Lösung ändert sich der Basisstrom für T1 bei Paketbetrieb jeweils während eines Paketes in dem Sinne, daß der Basisstrom zum Ende des Paketes hin abnimmt. Da die Schaltung 9 zur Verringerung des Innenwiderstandes nicht vorhanden ist, kann ein geringer Innenwiderstand durch verbesserte Kopplung des Trafos Tr erreicht werden, z.B. durch eine Ausführung des Trafos als Kammerwickeltrafo. Das Merkmal, daß der Basisstrom für T1 während eines Paketes etwas abfällt, weil der Koppelkondensator C4 nicht kurzgeschlossen wird, ist in Anbetracht der Vereinfachung der Schaltung tolerierbar. Außerdem läßt sich dadurch eine niedrige Paketfreguenz von etwa 50 Hz erreichen. Eine derart niedrige Paketfrequenz im Standby-Betrieb ist wichtig, weil sie unhörbar ist und daher im Standby-Betrieb keine hörbaren Schallschwingungen oder Vibrationen des Gerätes auftreten können.

Der Kondensator C6 parallel zu der Diode D11 in Fig. 1 und 2 hat besondere Bedeutung für den Startvorgang, also jeweils beim Einschalten des Empfängers, da dann die Diode D11 zunächst gesperrt ist, Der Kondensator C6 hat besondere Bedeutung bei niedrigen Netzspannungen, um auch dann eine Sättigung von T1 zu gewährleisten und eine Gefährdung von T1 durch mangelnde Sättigung zu vermeiden.

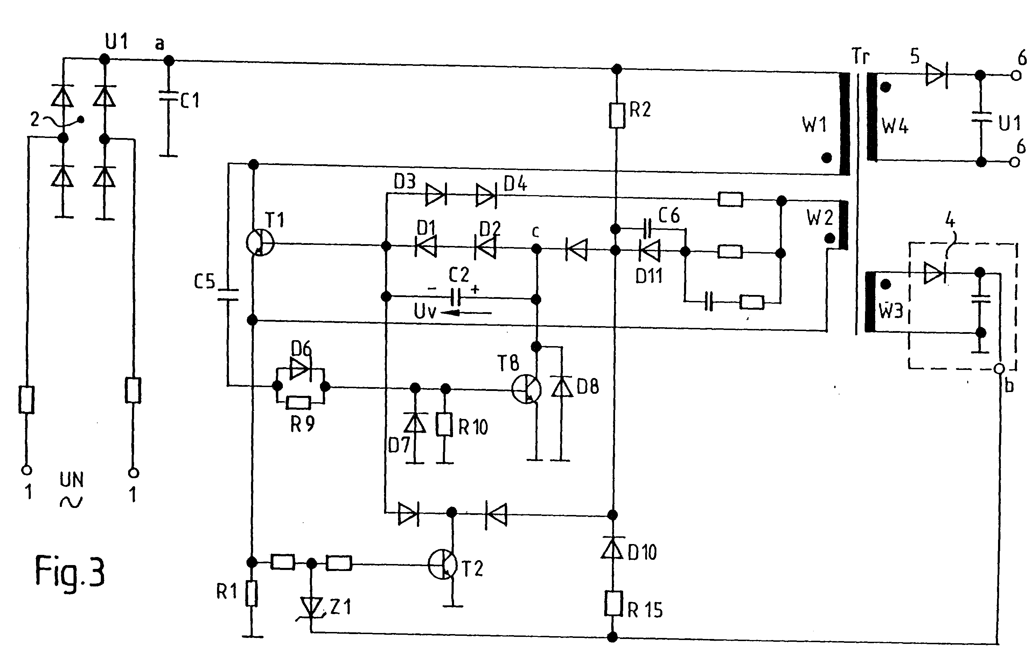

Fig. 3 zeigt eine Abwandlung der Schaltung nach Fig. 2, die ebenfalls ohne die Schaltung 9 von Fig. 1 und ohne den Transistor T7 zur Überbrückung des Koppelkondensators C4 arbeitet. Die Wirkungsweise der Schaltung gemäß Fig. 3 ist ähnlich derjenigen der Schaltung nach Fig. 2.

In einer praktisch erprobten Schaltung hatten die für die Erfindung wesentlichen Bauteile vorlgende Werte:

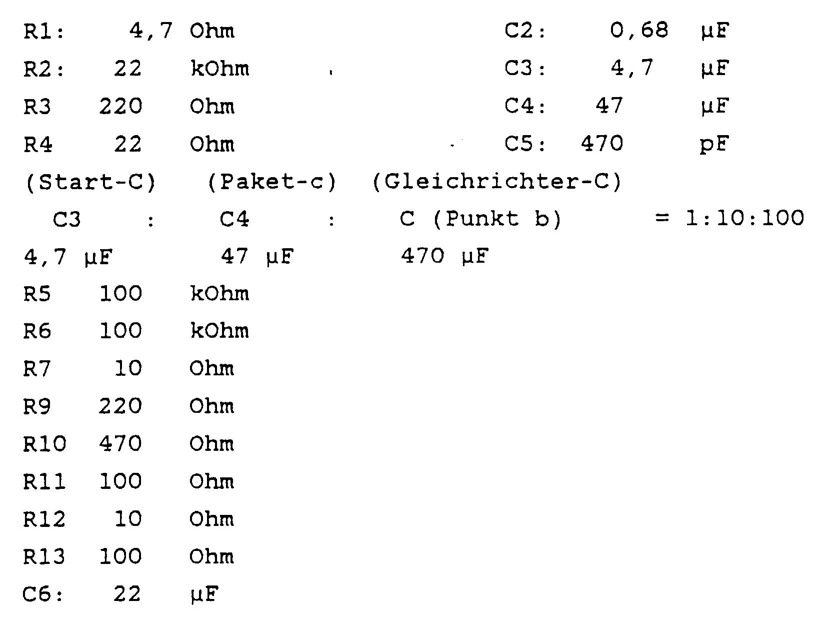

## Patentansprüche

1. Primärgeregeltes freischwingendes Schaltnetzteil mit einem Schalttransistor (T1), der in Reihe mit der Arbeitswicklung (W1) eines Transformators (Tr) und einem Strommeßwiderstand (R1) geschaltet ist, mit einer die Basisansteuerspannung für den Schalttransistor (T1) liefernden Ansteuerwicklung (W2) und einer Regelwicklung (W3), die über einen Meßgleichrichter (4) eine Regelspannung (Ur) zur Änderung der Stromflußdauer des Schalttransistors (T1) liefert, wobei eine von dem Strommeßwiderstand (R1) abgenommene Abschaltspannung (Us) über einen Schalter (T4) eine Abschaltung der Basisansteuerspannung am Schalttransistor (T1) bewirkt, sowie mit einer eine Betriebsspannung (U2, U3) für eine Last liefernden Sekundärwicklung (W4, W5),
**dadurch gekennzeichnet**,
daß der Ausgang (b) des Meßgleichrichters (4) über eine erste Schaltung (Z1, T2), T3) mit einem ersten Schwellwert eine Teilung der Abschaltspannung (Us) und über eine zweite Schaltung (Z1, T5 - T7) mit einem zweiten Schwellwert die Einschaltung eines Koppelkondensators (C4) in die Basisleitung des Schalttransistors (T1) zum Einleiten einer Sperrung dieses Transistors (T1) bewirkt.

2. Schaltnetzteil nach Anspruch 1, **dadurch gekennzeichnet**, daß der Ausgang (b) des Meßgleichrichters (4) über eine Zenerdiode (Zl) an die Steuerelektrode einer Transistorschaltung (T2, T3) angelegt ist, die Bestandteil eines ersten Spannungsteilers (R3, R4) für die Abschaltspannung (Us) bildet.

3. Schaltung nach Anspruch 2, **dadurch gekennzeichnet**, daß der Ausgang des ersten Spannungsteilers (R3, R4) an die Basis eines Abschalttransistors (T4) angeschlossen ist, dessen Kollektor/Emitter-Strecke zwischen der Basisleitung des Schalttransistors (T1) und Erde liegt.

4. Schaltung nach Anspruch 1, **dadurch gekennzeichnet**, daß der Ausgang (b) des Meßgleichrichters (4) über eine Schwellwertschaltung an den Steuereingang eines Transistor-Schaltverstärkers (T5 - T7) angeschlossen ist, dessen Ausgang parallel zu dem Koppelkondensator (C4) in der Basisleitung des Schalttransistors (T1) liegt.

5. Schaltung nach Anspruch 2 und 4, **dadurch gekennzeichnet**, daß eine beiden Schaltungen gemeinsame Zenerdiode (Z1) einerseits an den Ausgang (b) des Meßgleichrichters (4) und andererseits unmittelbar an den Steuereingang der Transistorschaltung (T2, T3) und über einen Spannungsteiler (R5, R6) an den Steuereingang des Schaltverstärkers (T5 - T7) angeschlossen ist.

6. Schaltung nach Anspruch 5, **dadurch gekennzeichnet**, daß der Ausgang des Spannungsteilers (R5, R6) an die Basis eines ersten Transistors (T5), dessen Kollektor mit der Basis eines zweiten Transistors (T6) und dessen Kollektor an die Basis eines dritten Transistors (T7) angeschlossen ist, dessen Kollektor/Emitter-Strekce parallel zu dem Koppelkondensator (C4) liegt.

7. Schaltung nach Anspruch 6, **dadurch gekennzeichnet**, daß der Kollektor des ersten Transistors (T5) zusätzlich an einen Punkt (c) in der Basisleitung des Schalttransistors (T1) angeschlossen ist.

8. Schaltung nach Anspruch 1, **dadurch gekennzeichnet**, daß zwischen der Steuerwicklung (W2) und der Basis des Schalttransistors (T1) eine so gepolte Diodenschaltung (D3, D4) liegt, daß beim Abschalten des Schalttransistors (T1) von der Steuerwicklung (W2) eine zusätzliche Sperrspannung auf den Schalttransistor (T1) gelangt.

9. Schaltung nach Anspruch 1, **dadurch gekennzeichnet**, daß der Spitzenwert der Abschaltspannung (Us) zur Steuerung einer Last (9) ausgenutzt ist, die parallel zum Ausgang (b) des Meßgleichrichters (4) liegt.

10. Schaltung nach Anspruch 9, **dadurch gekennzeichnet,** daß die Abschaltspannung (Us) an die Basis eines Transistors (T9) angelegt ist, dessen Kollektor über einen Kondensator (C6) geerdet und über einen Widerstand (R11) an den Ausgang (b) des Meßgleichrichters (4) angeschlossen ist, und dessen Emitter über einen Widerstand (R12) geerdet ist.

11. Schaltung nach Anspruch 1, **dadurch gekennzeichnet,** daß der Kollektor des Schalttransistors (T1) über eine amplitudenselektive, auf den positiven Impuls zu Beginn der Sperrphase ansprechende Schaltung mit der Basis eines Abschalthilfstransistors (T8) verbunden ist, dessen Kollektor/Emitter-Strecke zwischen einem Punkt (c) in der Basisleitung des Schalttransistors (T1) und Erde liegt.

12. Schaltung nach Anspruch 11, **dadurch gekennzeichnet,** daß der Kollektor des Abschalthilfstransistors (T8) an die der Basis des Schalttransistors (T1) abgewandte Elektrode eines im Basisweg des Schalttransistors (T1) liegenden, eine Sperrspannung (Us) speichernden Kondensators (C2) angeschlossen ist.

13. Schaltung nach Anspruch 11, **dadurch gekennzeichnet,** daß die amplitudenselektive Schaltung ein snubber-Netzwerk aus der Reihenschaltung eines Kondensators (C5) und der Parallelschaltung eines Widerstandes (R9) und einer Diode (D6) enthält.

14. Schaltung nach Anspruch 11, **dadurch gekennzeichnet,** daß zwischen dem Kollektor des Abschalthilfstransistors (T8) und Erde eine Diode (D8) liegt, die zusammen mit Dioden (D1 - D4) im Basisweg des Schalttransistors (T1) die negative Spannung an der Basis des Schalttransistors (T1) begrenzt.

## Claims

1. Freely oscillating switched-mode power supply controlled on the primary side having a switching transistor (T1) connected in series with a power winding (W1) of a transformer (Tr) and a current measurement resistor, with a drive winding (W2) delivering the switching voltage, and a regulating winding (W3) which delivers via a measuring rectifier (4) a control voltage (Ur) for varying the duration of current flow of the witching transistor (T1), a cut-off voltage (Us) tapped at the switching transistor (T1), by a shunt (R1) cutting off via a switch (T4) the base drive voltage at the switching transistor (T1), and with a secondary winding (W4, W5) which delivers an operating voltage (U2, U3) for a load, characterised in that the output (b) of the measuring rectifier (4) divides the cut-off voltage (Us) via a first circuit (Z1, T2, T3) with a first threshold value and switches on a coupling capacitor (C4) in the base line of the switching transistor (T1) via a second circuit (Z1, T5-T7) with a second threshold value.

2. Switched-mode power supply according to Claim 1, characterised in that the output (b) of the measuring rectifier (4) is applied via a Zener diode (Z1) to the control electrode of a transistor circuit (T2, T3) which forms a component of a first voltage divider (R3, R4) for the cut-off voltage (Us).

3. Circuit according to Claim 2, characterised in that the output of the first voltage divider (R3, R4) is connected to the base of a turn-off transistor (T4) whose collector/emitter junction is connected between the base line of the switching transistor (T1) and earth.

4. Circuit according to Claim 1, characterised in that the output (b) of the measuring rectifier (4) is connected via a threshold circuit to the control input of a transistor amplifier (T5-T7) whose output is connected in parallel with the coupling capacitor (C4) in the base line of the switching transistor (T1).

5. Circuit according to Claims 2 and 4, characterised in that a Zener diode (Z1) common to both circuits is connected, on the one hand, to the output (b) of the measuring rectifier (4) and, on the other hand, directly to the control input of the transistor circuit (T2, T3) and via a voltage divider (R5, R6) to the control input of the switching amplifier (T5-T7).

6. Circuit according to Claim 5, characterised in that the output of the voltage divider (R5, R6) is connected to the base of a first transistor (T5) whose collector is connected to the base of a second transistor (T6) and whose collector is connected to the base of a third transistor (T7) whose collector/emitter junction is connected in parallel with the coupling capacitor (C4).

7. Circuit according to Claim 6, characterised in that the collector of the first transistor (T5) is additionally connected to a point (c) in the base line of the switching transistor (T1).

8. Circuit according to Claim 1, characterised in that there is connected between the regulating winding (W2) and the base of the switching transistor (T1) a diode circuit (D3, D4) poled in such a way that when the switching transistor (T1) is turned off, an additional blocking voltage passes from the regulating winding (W2) to the switching transistor (T1).

9. Circuit according to Claim 1, characterised in that the peak value of the cut-off voltage (Us) is used to control a load (9) which is connected in parallel with the output (b) of the measuring rectifier (4).

10. Circuit according to Claim 9, characterised in that the cut-off voltage (Us) is applied to the base of a transistor (T9) whose collector is earthed via a capacitor (C6) and is connected via a resistor (R11) to the output (b) of the measuring rectifier (4), and whose emitter is earthed via a resistor (R12).

11. Circuit according to Claim 1, characterised in that the collector of the switching transistor (T1) is connected via an amplitude-selective circuit which responds to the positive pulse at the start of the blocking phase to the base of an auxiliary turn-off transistor (T8) whose collector/emitter junction is connected between a point (c) in the base line of the switching transistor (T1) and earth.

12. Circuit according to Claim 11, characterised in that the collector of the auxiliary turn-off transistor (T8) is connected to the electrode, remote from the base of the switching transistor (T1), of a capacitor (C2) which is connected in the base line of the switching transistor (T1) and stores a blocking voitage (Us).

13. Circuit according to Claim 11, characterised in that the amplitude-selective circuit contains a snubber network composed of the series circuit of a capacitor (C5) and the parallel circuit of a resistor (R9) and a diode (D6).

14. Circuit according to Claim 11, characterised in that connected between the collector of the auxiliary turn-off transistor (T8) and earth is a diode (D8) which together with diodes (D1-D4) in the base line of the switching transistor (T1) limits the negative voltage at the base of the switching transistor (T1).

## Revendications

1. Alimentation à commutation à oscillation libre à réglage primaire intégrant un transistor de commutation (1) monté en série avec l'enroulement primaire (W1) d'un transformateur (Tr) et avec une résistance mesurant le courant (R1), intégrant en outre un enroulement de commande (W2) fournissant la tension de commande de base pour ledit transistor de commutation (T1), et un enroulement de réglage (W3) fournissant, par l'intermédiaire d'un redresseur de mesure (4), une tension de réglage (Ur) pour modifier la durée de conduction dudit transistor de commutation (T1), sachant qu'une tension de coupure (Us) prélevée au niveau de la résistance mesurant le courant (R1) assure, par l'intermédiaire d'un interrupteur (T4), la coupure de la tension de commande de base du transistor de commutation (T1), et intégrant enfin un enroulement secondaire (W4, W5) fournissant une tension de service (U2, U3) pour une charge,
alimentation à commutation **caractérisée en ce que**
la sortie (b) dudit redresseur de mesure (4) assure une division de la tension de coupure (Us) par l'intermédiaire d'un premier circuit (Z1, T2), T3) pourvu d'un premier seuil, et, par l'intermédiaire d'un second circuit (Z1, T5 - T7) présentant un second seuil, la connexion d'un condensateur de couplage (C4) dans le circuit de base d'un transistor de commutation (T1) pour amorcer le blocage dudit transistor (T1).

2. Alimentation à commutation selon la revendication 1 **caractérisée en ce que** la sortie (b) du redresseur de mesure (4) est connectée, par l'intermédiaire d'une diode Zener (Z1), à l'émetteur d'un circuit à transistors (T2, T3) qui fait partie d'un premier diviseur de tension (R3, R4) pour la tension de coupure (Us).

3. Circuit selon la revendication 2 **caractérisé en ce que** la sortie du premier diviseur de tension (R3, R4) est connectée à la base d'un transistor de coupure (T4) dont le circuit collecteur-émetteur est monté entre le circuit de base dudit transistor de commutation (T1) et la terre.

4. Circuit selon la revendication 1 **caractérisé en ce que** la sortie (b) du redresseur de mesure (4) est connectée, par l'intermédiaire d'un circuit à seuil, T7) dont la sortie est disposée en parallèle par rapport au condensateur de couplage (C4) dans le circuit de base du transistor de commutation (T1).

5. Circuit selon les revendications 2 et 4 **caractérisé en ce qu**'une diode Zener (Z1) commune aux deux circuits, est connectée à la sortie (b) d'un redresseur de mesure (4) d'une part, et directement à l'entrée de commande du circuit à transistors (T2, T3) d'autre part, ainsi que, par l'intermédiaire d'un diviseur de tension (R5, R6,) à l'entrée de commande dudit amplificateur de commutation (T5 - T7).

6. Circuit selon la revendication 5 **caractérisé en ce que** la sortie du diviseur de tension (R5, R6) est connectée à la base d'un premier transistor (T5) dont le collecteur est raccordé à la base d'un second transistor (T6) et dont le collecteur est raccordé à la base d'un troisième transistor (T7) dont le circuit collecteur-émetteur est placé en parallèle avec le condensateur de couplage (C4).

7. Circuit selon la revendication 6 **caractérisé en ce que** le collecteur du premier transistor (T5) est en outre connecté à un point (c) dans le circuit de base du transistor de commutation (T1).

8. Circuit selon la revendication 1 **caractérisé en ce qu**'entre l'enroulement de commande (W2) et la base du transistor de commutation (T1) se trouve disposé un circuit à diodes (D3, D4) polarisé de telle manière qu'une tension de blocage complémentaire est appliquée au transistor de commutation (T1) au moment de la coupure dudit transistor de commutation (T1) par ledit enroulement de commande (W2).

9. Circuit selon la revendication 1 **caractérisé en ce que** la valeur de pointe de la tension de coupure (Us) est utilisée pour la commande d'une charge (9) qui est disposée en parallèle par rapport à la sortie (b) du redresseur de mesure (4).

10. Circuit selon la revendication 9 **caractérisé en ce que** la tension de coupure (Us) est appliquée à la base d'un transistor (T9) dont le collecteur est mis à la terre par l'intermédiaire d'un condensateur (C6) et connecté à la sortie (b) du redresseur de mesure (4) par l'intermédiaire d'un résistance (R11), et dont l'émetteur est mis à la terre par l'intermédiaire d'une résistance (R12).

11. Circuit selon la revendication 1 **caractérisé en ce que**, par l'intermédiaire d'un circuit à sélection d'amplitude et répondant à l'impulsion positive au début de la phase de blocage, le collecteur du transistor de commutation (T1) est relié à la base d'un transistor de coupure auxiliaire (T8) dont le circuit collecteur-émetteur est monté entre un point (c) dans le circuit de base du transistor de commutation (T1) et la terre.

12. Circuit selon la revendication 11 **caractérisé en ce que** le collecteur du transistor de coupure auxiliaire (T8) est connecté à l'électrode opposée à la base du transistor de commutation (T1) d'un condensateur (C2) placé dans le circuit de base dudit transistor de commutation (T1) et mémorisant une tension de blocage (Us).

13. Circuit selon la revendication 11 **caractérisé en ce que** le circuit à sélection d'amplitude est un réseau "snubber" obtenu par le montage en série d'un condensateur (C5) et le montage en parallèle d'une résistance (R9) et d'une diode (D6).

14. Circuit selon la revendication 11 **caractérisé en ce qu**'entre le collecteur du transistor de coupure auxiliaire (T8) et la terre, se trouve disposée une diode (D8) qui sert à limiter la tension négative à la base du transistor de commutation (T1) en association avec des diodes (D1 - D2) prévues dans le circuit de base du transistor de commutation (T1).
